# EUROPEAN PATENT SPECIFICATION

(11) **EP 1 385 299 B1**
(45) Date of publication and mention of the grant of the patent: **15.06.2005**
(21) Application number: 03017062.5
(22) Date of filing: 25.07.2003
(51) Int. Cl.: H04L 12/26, H04L 12/413

(54) **Physical layer device with line state encoding**
Vorrichtung der physikalischen Schicht mit Kodierung des Leitungszustandes
Dispositif de couche physique avec codage d'états d'une ligne

(30) Priority: 26.07.2002 US 205623
(43) Date of publication of application: 28.01.2004
(73) Proprietor: Broadcom Corporation, Irvine, California 92618-7013 (US)
(72) Inventor: Huff, Gary S., Laguna Hills, California 92653 (US)
(74) Representative: Jehle, Volker Armin, Dipl.-Ing.

(56) References cited:
- EP-A- 0 863 640
- WO-A-02/15476
- INTEL CORPORATION: "LXT1000 Gigabit Ethernet Transceiver, Order Number 249276-002" INTEL DATASHEET, [Online] July 2001 (2001-07), pages 1-106, XP002259432 Retrieved from the Internet: <URL:http://www.intel.com/design/network/p roducts/LAN/datashts/24927602.pdf> [retrieved on 2003-10-28]
- REYNERI L M: "Theoretical and implementation aspects of pulse streams: an overview" MICROELECTRONICS FOR NEURAL, FUZZY AND BIO-INSPIRED SYSTEMS, 1999. MICRONEURO '99. PROCEEDINGS OF THE SEVENTH INTERNATIONAL CONFERENCE ON GRANADA, SPAIN 7-9 APRIL 1999, LOS ALAMITOS, CA, USA,IEEE COMPUT. SOC, US, 7 April 1999 (1999-04-07), pages 78-89, XP010329553 ISBN: 0-7695-0043-9

## Description

### BACKGROUND OF THE INVENTION

### Field of the Invention

The present invention relates to a communication between a physical layer device (PHY) and a higher layer device (e.g., a Media Access Controller, or MAC).

### Related Art

Conventional network communication involves the use of at least two physical layer devices communicating over a physical channel. Such physical layer devices are typically referred to as PHY devices, or simply PHYs. Each PHY normally needs a media access controller, or MAC, to which it interfaces, and which controls operation of the PHY.

Examples of a PHY include cable modems, network cards for LANs and WANs, cellular modems, etc. Examples of a physical layer include wire or wireless communications media, fiber optic lengths, WANs, etc.

Communications devices, such as those that communicate over Ethernet, or wireless networks, include a physical layer device, commonly called PHY device, or simply PHY, and usually a media access controller, or MAC. Normally, aside from data transfers between the PHY and the MAC, there are various conventional ways of communicating status information between the PHY and the MAC. For example, the PHY may need to communicate to the MAC the status of the channel, or whether another PHY on the remote end is connected to the physical channel. One conventional way of doing that is by having a register within the PHY, which the MAC periodically polls. Another way is to add additional pins, or connection lines, to the MAC-PHY interface, and dedicate those pins to the desired status signals.

The document "LXT1000 Gigabit Ethernet Transceiver, Order Number 249276-002", INTEL DATA SHEET, pages 1-106, discloses an Ethernet transceiver which is able to communicate with a remote device over a physical channel. A state of the remote device is outputted onto a pin of a controller interface in form of an encoded sequence whereat the state "Link is up/down" could be detected.

The addition of extra pins is extremely problematic, since pins represents very valuable "real estate". The use of software driven polling of registers adds overhead to the software possibly degrading the overall performance of the system.

Accordingly, it is desirable to have a way for the PHY to communicate with the MAC without increasing the number of pins on the MAC-PHY interface and without using software driven register polling.

### SUMMARY OF THE INVENTION

The present invention is directed to a physical layer device with line state encoding that substantially obviates one or more of the problems and disadvantages of the related art.

Accordingly, there is provided a physical layer device including a transceiver for communicating with a remote device over a physical channel. A remote energy detection circuit monitors the physical channel. A sequence encoder is connected to a pin of the MAC-PHY interface, and outputs a state of the remote device onto the pin for receipt by a media access controller (MAC) based on information from the remote energy detection circuit. The state of the remote device includes at least the states of NO DEVICE CONNECTED, LINK WITH REMOTE PHY ESTABLISHED, and ENERGY PRESENT BUT DEVICE UNKNOWN.

The physical layer device further comprises a filter and stretch circuit for filtering and/or debouncing the physical channel signal coupled to the remote energy detection circuit and the sequence encoder, wherein the filter and stretch circuit and the remote energy detection circuit are coupled to the sequence encoder via a first path and the physical layer device includes a link status circuit verifying status of connection to the remote device, wherein the link status circuit is coupled to the sequence encoder via a second path.

Additional features and advantages of the invention will be set forth in the description that follows, and in part will be apparent from the description, or may be learned by practice of the invention. The advantages of the invention will be realized and attained by the structure particularly pointed out in the written description.

It is to be understood that both the foregoing general description and the following detailed description are exemplary and explanatory and are intended to provide further explanation of the invention.

### BRIEF DESCRIPTION OF THE FIGURES

FIG. 1 shows a block diagram of a physical layer device of the present invention; and
FIG. 2 shows a timing diagram for the device of FIG. 1.

### DETAILED DESCRIPTION OF THE INVENTION

Reference will now be made in detail to the embodiments of the present invention, examples of which are -illustrated in the accompanying drawings.

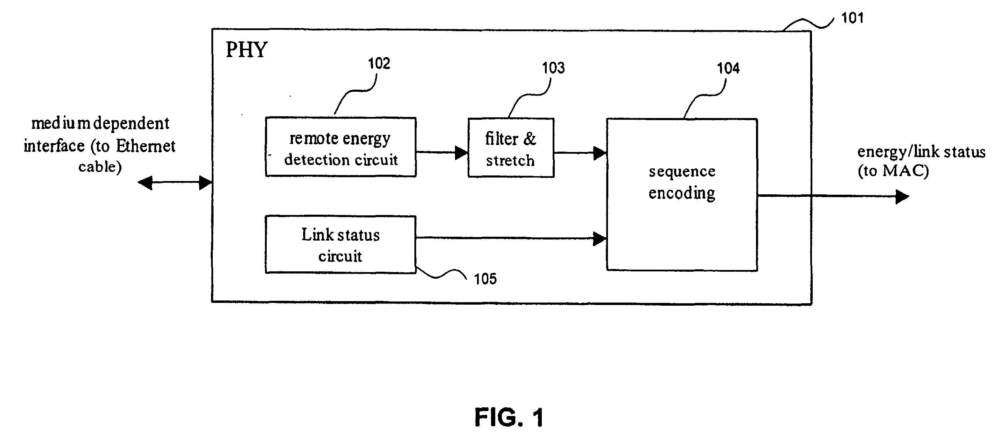

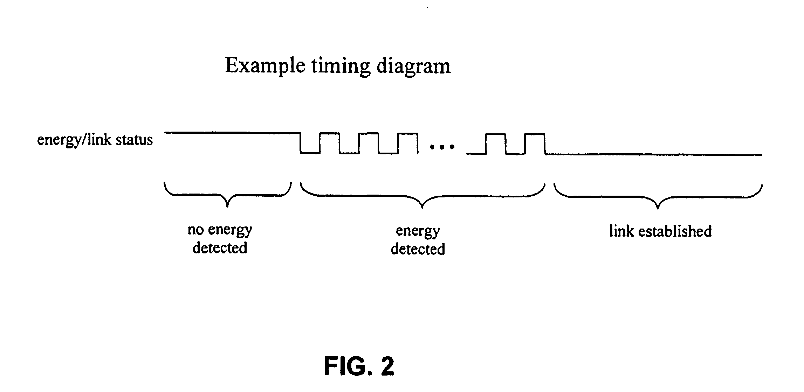

In one embodiment of the present invention, which is illustrated in FIG. 1, a PHY 101 includes an energy detection circuit 102 that can determine the status of the physical channel (e.g., an Ethernet cable), and can examine energy present (or voltage perturbations) on the physical channel (see also FIG. 2). The PHY 101 also includes a filter and stretch circuit 103 for filtering and/or debouncing the physical channel signal. The raw energy detection indication is filtered to eliminate noise spikes. This is accomplished by waiting at least 2.6 ms after first detecting energy to confirm that energy is still present on the medium. When the energy is confirmed, a bit indicating energy present is set. This energy present bit will be cleared if no energy is detected on the medium for an extended period of time. This timeout value is programmable, for example, up to 7.5 seconds.

A link status circuit 105 verifies status of connection to a remote PHY device, and a sequence encoder 104 outputs a sequence representing the state information onto a pin, or connection line of the MAC-PHY interface that a higher layer device (e.g., a MAC) can read. In other words, the MAC can monitor the pin or connection line to the physical layer device, such as an Ethernet connection. Therefore, the MAC can receive the output of the sequence encoder 104. The sequence encoding combines the energy and link status indications onto a single binary signal, which, as discussed below, may be a steady logic ONE, a steady logic ZERO, or a square wave. The square wave frequency is selectable, for example, 2.5 MHz or 6 Hz. A transceiver (not shown in the figures) is used to communicate with a remote PHY.

For example, in the case of a three-state (i.e., non-binary) detection circuit, the PHY energy detect circuit 102 (described in additional detail in International Application with Publication Number WO 02/15476 A2, entitled ENERGY DETECT WITH AUTO PAIR SELECT, filed on August 13, 2001) can perceive three possible states: (1) no remote device connected, (2) remote device connected and functioning, and (3) energy present on the physical channel, but device nature unknown. This can be done by measuring the energy present on the physical channel, or on a subset of pins corresponding to the physical channel. The PHY transceiver can then output a signal onto the pin, where logical 1 can represent no device connected remotely to the physical channel, logical 0 can represent the presence of a remote device connected to the physical channel, and a square wave can represent the existence of energy detected on the channel but where the nature of the remote device connected to the physical channel is not determined. Thus, this approach allows the physical layer device PHY to communicate with a higher level device, or MAC, more quickly and easily, without taking up additional pins. Such a signal, discussed above may be asserted on any of the pins, e.g., the control pins, status pins, interrupt pins, LED pins, or indicator pins, to the extent a particular interface standard supports them.

In addition to the three-state format discussed above (active LOW, active HIGH, and square wave), it is possible for the physical layer device to communicate substantial more information by encoding it in the AC (square wave) waveform. Thus, instead of a square wave (e.g., a 400 nanosecond cycle square wave), the duty cycle of the square wave can be varied, such that the square wave is a 10% duty cycle square wave, 20% duty cycle, etc., to represent the link status, or other state information. Alternatively, a serial byte or word may be transmitted using the same approach instead of an AC waveform.

Thus, instead of a three-state signal, the PHY can transmit information corresponding to any number of states to the MAC in this fashion. Information that may be transmitted includes the speed of the connection (e.g., 10 megabit per second Ethernet, 100 megabit per second Ethernet, 1000 megabit per second Ethernet), line quality information, whether the physical device is a master or a slave, line noise information, ability to transmit at maximum permitted speed (e.g., in a case where both PHY devices, on both ends are capable of transmitting at 1000 megabit per second on an Ethernet connection, but due to noise problems on the physical channel, have to drop the transmission rate down to 100 megabit per second).

It will be also appreciated that while selection of a 400 nanosecond cycle square wave form represents one example, a number of other clock frequencies may be used.

The status of the cable connected to an Ethernet transceiver (usually part of the PHY 101) may be determined by examining the link status and energy detection functions. The energy detect function may be used to determine the existence of a potential link partner even if valid link is not achieved, but valid link is required for actual data transfer. To examine both of these functions on previous Ethernet transceiver designs requires monitoring at least two pins and/or accessing MII registers. The invention provides a mechanism to observe these functions using a single pin on the device. This mechanism may be extended to observe additional status using a single pin.

In an embodiment, the PHY transceiver can encode three states onto a single pin of the device. These states are no remote energy detected, valid link not established and remote energy detected, and valid link established (which requires remote energy). When no remote energy is detected the Ethernet transceiver drives the status pin high (logic ONE). When valid link is established the Ethernet transceiver drives its status pin low (logic ZERO). When remote energy is detected without a valid link, the Ethernet transceiver drives a repeating sequence on its status pin. Specifically, the status pin is driven LOW for 200 ns, then HIGH for 200 ns, and this sequence repeats as long as the state persists. Other sequences may be used to provide additional status.

The energy detection function must sense energy received from a remote transceiver while disregarding energy transmitted from the local transceiver. The resulting energy indication is filtered to eliminate reaction to spurious noise, and this result is stretched by a programmable amount of time defined by the user.

It will be understood by those skilled in the art that various changes in form and details may be made therein without departing from the scope of the invention as defined in the appended claims. Thus, the breadth and scope of the present invention should not be limited by any of the above-described exemplary embodiments, but should be defined only in accordance with the following claims and their equivalents.

## Claims

1. A physical layer device (PHY) comprising:
a transceiver for communicating with a remote device over a physical channel;
a remote energy detection circuit (102) that monitors the physical channel;
a sequence encoder (104) connected to a pin of a physical layer device-media access controller (MAC) interface, and outputting a state of the remote device onto the pin for receipt by the MAC based on information from the remote energy detection circuit,
wherein the state of the remote device includes at least the state of NO DEVICE CONNECTED, LINK WITH REMOTE PHY ESTABLISHED, and ENERGY PRESENT BUT DEVICE UNKNOWN;
a filter and stretch circuit (103) for filtering and/or debouncing the physical channel signal coupled to the remote energy detection circuit (102) and the sequence encoder (104), wherein the filter and stretch circuit (103) and the remote energy detection circuit (102) are coupled to the sequence encoder (104) via a first path; and
a link status circuit (105) verifying status of connection to the remote device, wherein the link status circuit (105) is coupled to the sequence encoder (104) via a second path.

2. The physical layer device of claim 1 wherein the filter and stretch circuit (103) is configured to filter raw energy detection indication to eliminate noise spikes and is configured to start filtering at least 2,6ms after first detecting energy.

3. The physical layer device of claim 2 wherein the filter and stretch circuit (103) is configured to set an energy present bit when energy is confirmed.

4. The physical layer device of claim 3 wherein the filter and stretch circuit (103) is configured to clear the energy present bit if no energy is detected on the medium for an programmable extended period of time.

5. The physical layer device of claim 4 wherein the timeout value is programmable up to 7,5 seconds.

6. The physical layer device of claim 1 wherein the transceiver is configured to drive a repeating sequence on its status pin if the state REMOTE ENERGY IS DETECTED WITHOUT A VALID LINK is encoded.

7. The physical layer device of claim 1 wherein the repeating sequence includes a LOW signal for the time of 200 ns, then a HIGH signal for the time of 200 ns whereat this sequence repeats as long as the state persists.

8. The physical layer device of claim 1 wherein the state of the remote device includes physical channel noise information.

9. The physical layer device of claim 1 wherein the sequence encoder (104) outputs information onto the pin identifying the physical layer device as either a master or a slave.

10. The physical layer device of claim 1 wherein the state is encoded using a square wave.

11. The physical layer device of claim 1 wherein the state is encoded using a square wave with a variable duty cycle.

12. The physical layer device of claim 1 wherein the pin is a status pin or an interrupt pin or an LED pin.

## Patentansprüche

1. Bitübertragungsschichtvorrichtung (Physical-Layer-Vorrichtung - PHY) umfassend:
- eine Sende-/Empfangseinrichtung zur Datenübertragung mit einer entfernten Einrichtung über einen physikalischen Kanal,
- eine entfernte Energieermittlungsschaltung (102), die den physikalischen Kanal überwacht,
- einen Sequenzkodierer (104), der mit einem Anschluss einer Bitübertragungsschichtvorrichtung/Media-Access-Controller(MAC)-Schnittstelle verbunden ist und einen Zustand der entfernten Einrichtung an den Anschluss zum Empfang durch den MAC basierend auf Informationen von der entfernten Energieermittlungsschaltung ausgibt,
wobei der Zustand der entfernten Einrichtung wenigstens den Zustand KEINE EINRICHTUNG ANGESCHLOSSEN, VERBINDUNG MIT ENTFERNTER PHY HERGESTELLT und ENERGIE VORHANDEN, ABER EINRICHTUNG UNBEKANNT umfasst,
- eine Filter- und Erweiterungsschaltung (103) zum Filtern und/oder Entprellen des Signals des physikalischen Kanals, welche mit der entfernten Energieermittlungsschaltung (102) und dem Sequenzkodierer (104) verbunden ist, wobei die Filter- und Erweiterungsschaltung (103) und die entfernte Energieermittlungsschaltung (102) über einen ersten Pfad mit dem Sequenzkodierer (104) verbunden sind, und
- eine Verbindungsstatusschaltung (105), die den Status der Verbindung zur entfernten Einrichtung verifiziert, wobei die Verbindungsstatusschaltung (105) über einen zweiten Pfad mit dem Sequenzkodierer (104) verbunden ist.

2. Bitübertragungsschichtvorrichtung nach Anspruch 1,
wobei die Filter- und Erweiterungsschaltung (103) dafür konfiguriert ist, eine Rohenergieermittlungsanzeige zu filtern, um Rauschspitzen zu eliminieren, und dafür, das Filtern wenigstens 2,6 ms nach einer ersten Energieermittlung zu beginnen.

3. Bitübertragungsschichtvorrichtung nach Anspruch 2,
wobei die Filter- und Erweiterungsschaltung (103) dafür konfiguriert ist, ein Energievorhanden-Bit zu setzen, wenn die Energie bestätigt wird.

4. Bitübertragungsschichtvorrichtung nach Anspruch 3,
wobei die Filter- und Erweiterungsschaltung (103) dafür konfiguriert ist, das Energievorhanden-Bit zu löschen, wenn an dem Medium über einen programmierbaren ausgedehnten Zeitraum keine Energie ermittelt wird.

5. Bitübertragungsschichtvorrichtung nach Anspruch 4,
wobei der Zeitüberwachungswert auf bis zu 7,5 Sekunden programmierbar ist.

6. Bitübertragungsschichtvorrichtung nach Anspruch 1,
wobei die Sende-/Empfangseinrichtung dafür konfiguriert ist, eine Wiederholungssequenz an ihrem Statusanschluss anzusteuern, wenn der Zustand ENTFERNTE ENERGIE WIRD ERMITTELT OHNE GÜLTIGE VERBINDUNG kodiert wird.

7. Bitübertragungsschichtvorrichtung nach Anspruch 1,
wobei die Wiederholungssequenz für den Zeitraum von 200 ns ein LOW-Signal, dann für den Zeitraum von 200 ns ein HIGH-Signal umfasst, wobei sich diese Sequenz wiederholt, solange der Zustand andauert.

8. Bitübertragungsschichtvorrichtung nach Anspruch 1,
wobei der Zustand der entfernten Einrichtung Rauschinformationen hinsichtlich des physikalischen Kanals umfasst.

9. Bitübertragungsschichtvorrichtung nach Anspruch 1,
wobei der Sequenzkodierer (104) Informationen an den Anschluss ausgibt, welche die Bitübertragungsschichtvorrichtung entweder als Master oder Slave ausweisen.

10. Bitübertragungsschichtvorrichtung nach Anspruch 1,
wobei der Zustand unter Verwendung einer Rechteckwelle kodiert wird.

11. Bitübertragungsschichtvorrichtung nach Anspruch 1,
wobei der Zustand unter Verwendung einer Rechteckwelle mit einem variablen Tastverhältnis kodiert wird.

12. Bitübertragungsschichtvorrichtung nach Anspruch 1,
wobei der Anschluss ein Statusanschluss oder ein Unterbrechungsanschluss oder ein LED-Anschluss ist.

## Revendications

1. Dispositif de couche physique (PHY) comprenant :
un émetteur-récepteur pour communiquer avec un dispositif éloigné par le biais d'un canal physique ;
un circuit de détection d'énergie éloignée (102) qui surveille le canal physique ;
un codeur de séquence (104) connecté à une broche d'une interface d'un dispositif de commande d'accès des périphériques à couche physique (MAC), et délivrant un état du dispositif éloigné sur la broche pour réception par le MAC basée sur les informations provenant du circuit de détection d'énergie éloignée,
dans lequel l'état du dispositif éloigné comprend au moins l'état de AUCUN DISPOSITIF CONNECTE, LIAISON ETABLIE AVEC LE PHY ELOIGNE, et ENERGIE PRESENTE MAIS DISPOSITIF INCONNU ;
un filtre et un circuit d'extension (103) pour filtrer et/ou éliminer les rebonds du signal de canal physique couplé au circuit de détection d'énergie éloignée (102) et au codeur de séquence (104), dans lequel le filtre et le circuit d'extension (103) et le circuit de détection d'énergie éloignée (102) sont couplés au codeur de séquence (104) par l'intermédiaire d'un premier trajet ; et
un circuit d'état de liaison (105) vérifiant l'état de connexion au dispositif éloigné, dans lequel le circuit d'état de liaison (105) est couplé au codeur de séquence (104) par l'intermédiaire d'un deuxième trajet.

2. Dispositif de couche physique selon la revendication 1, dans lequel le filtre et le circuit d'extension (103) sont configurés pour filtrer l'indication de détection d'énergie brute afin de supprimer les pointes parasites et est configuré pour démarrer le filtrage au moins 2,6 ms après la première détection d'énergie.

3. Dispositif de couche physique selon la revendication 2, dans lequel le filtre et le circuit d'extension (103) sont configurés pour établir un bit d'énergie présent lorsque l'énergie est confirmée.

4. Dispositif de couche physique selon la revendication 3, dans lequel le filtre et le circuit d'extension (103) sont configurés pour libérer le bit d'énergie présent si aucune énergie n'est détectée sur le support pendant une période de temps étendue programmable.

5. Dispositif de couche physique selon la revendication 4, dans lequel la valeur de temporisation est programmable jusqu'à 7,5 secondes.

6. Dispositif de couche physique selon la revendication 1, dans lequel l'émetteur-récepteur est configuré pour entraîner une séquence de répétition sur sa broche d'état si l'état ENERGIE ELOIGNEE EST DETECTEE SANS LIAISON VALABLE est codé.

7. Dispositif de couche physique selon la revendication 1, dans lequel la séquence de répétition comprend un signal FAIBLE pour le temps de 200 ns, puis un signal ELEVE pour le temps de 200 ns, après quoi cette séquence se répète aussi longtemps que l'état persiste.

8. Dispositif de couche physique selon la revendication 1, dans lequel l'état du dispositif éloigné comprend des informations de bruit de canal physique.

9. Dispositif de couche physique selon la revendication 1, dans lequel le codeur de séquence (104) délivre des informations sur la broche en identifiant le dispositif de couche physique soit comme maître, soit comme esclave.

10. Dispositif de couche physique selon la revendication 1, dans lequel l'état est codé en utilisant une onde carrée.

11. Dispositif de couche physique selon la revendication 1, dans lequel l'état est codé en utilisant une onde carrée avec un facteur de forme variable.

12. Dispositif de couche physique selon la revendication 1, dans lequel la broche est une broche d'état ou une broche d'interruption ou une broche DEL.
